# EUROPÄISCHE PATENTSCHRIFT

(11) **EP 1 612 102 B1**
(45) Veröffentlichungstag und Bekanntmachung des Hinweises auf die Patenterteilung: **21.03.2007**
(21) Anmeldenummer: 05104380.0
(22) Anmeldetag: 24.05.2005
(51) Int. Cl.: B60Q 1/14

(54) **Lenkrad mit einem Bedienelement**
Steering wheel with operating element
Volant avec élement de réglage

(30) Priorität: 29.06.2004 DE 102004031309
(43) Veröffentlichungstag der Anmeldung: 04.01.2006
(73) Patentinhaber: ROBERT BOSCH GMBH, 70442 Stuttgart (DE)
(72) Erfinder: Flick, Bernd, 31199 Diekholzen (DE); Placke, Lars, 30163 Hannover (DE); Modler, Holger, 31139 Hildesheim (DE); Dahlhoff, Achim, 31141 Hildesheim (DE)

(56) Entgegenhaltungen:
- EP-A- 0 382 350
- DE-A1- 10 050 578
- US-A- 6 104 101

## Beschreibung

### Stand der Technik

Die Erfindung geht aus von einem Lenkrad mit einem Bedienelement nach der Gattung des Hauptanspruchs. Aus der DE 41 30 993 C1 ist bereits ein Lenkrad bekannt, das ein Lenkradkreuztastersystem aufweist. Hierzu ist an dem Lenkrad ein Bedienelement angeordnet, das kreisförmig angeordnete elektrische Kontakte aufweist, die den Eingängen einer elektronischen Recheneinheit zugeführt sind. Zur Bedienung des Bedienelementes muss ein Benutzer jedoch den Lenkradkranz zumindest teilweise loslassen, um das Bedienelement betätigen zu können.

Aus der EP 911 750 A2 ist eine Eingabeeinheit bekannt, bei der auf der Rückseite des Lenkradkranzes ein Bedienelement angeordnet ist, das sowohl durch Druck, aber auch durch Verkippen gegenüber seiner Halterung in der Rückseite des Lenkradkranzes zur Steuerung einer Markierung in einer Anzeige verwendet werden kann. Zwar muss hierbei das Lenkrad von einem Fahrer nicht unbedingt mehr losgelassen werden, zur Steuerung muss jedoch eine besondere Handhaltung angenommen werden, um das Bedienelement auf der Rückseite zu kontrollieren.

Aus der US 6,104,101 ist eine Fahrerschnittstelle für ein Fahrzeug zur Kontrolle von Parametern in einem Fahrzeug bekannt, bei der ein Drehschalter am Rand eines Lenkrades angeordnet ist. Der Drehschalter kann durch eine axiale oder durch eine radiale Verschiebung für die Einstellung von Fahrzeugparametern verwendet werden. Bei einer axialen Verschiebung ist zusätzlich eine Feder vorgesehen, bei der das Bedienelement gegen die axiale Verschiebung wieder in eine Ausgangslage bewegt wird.

### Vorteile der Erfindung

Das erfindungsgemäße Lenkrad mit einem Bedienelement mit den Merkmalen des Hauptanspruchs hat demgegenüber den Vorteil, dass der Fahrer das Lenkrad im Wesentlichen unverändert festhalten kann, während er die Bedienung durchführt. Hierzu ist ein Teil des Lenkradkranzes als ein drehbares Bedienelement ausgeführt, wobei das Bedienelement um den Lenkradkranz herumgedreht werden kann. Ein Fahrer kann dieses Bedienelement daher während der normalen Haltung des Lenkrades betätigen, ohne dass er seine Handhaltung an dem Lenkradkranz verändern muss.

Erfindungsgemäß ist eine Feder zur Rückstellung des Bedienelements in eine Ausgangslage vorgesehen, so dass nach einem Verdrehen des Bedienelements die ursprüngliche Anordnung des Bedienelements am Lenkradkranz wieder hergestellt wird.

Durch die in den Unteransprüchen aufgeführten Maßnahmen sind vorteilhafte Weiterbildungen und Verbesserungen des im Hauptanspruch angegebenen Lenkrads mit einem Bedienelement möglich. Besonders vorteilhaft ist, dass die Drehachse am Montageort des Bedienelements durch den ansonsten kreisförmigen Verlauf des Lenkradkranzes im Wesentlichen beschrieben ist. Hierdurch kann das Bedienelement bei einer Drehung so bewegt werden, dass es nicht oder nur unwesentlich über den Oberflächenverlauf des Lenkradkranzes hinausragt. Das Bedienelement stört daher, selbst in einem in irgendeiner Weise betätigten oder ausgelenkten Zustand, ein Halten des Lenkradkranzes und damit ein Lenken nicht.

Vorteilhaft ist ferner, dass das Bedienelement in Raststufen um die Drehachse verdrehbar ist. Hierdurch können gezielte, gestufte Eingaben ermöglicht werden, wobei der Benutzer zudem eine haptische Rückmeldung über seine Eingabe erhält.

Ferner ist es vorteilhaft, das Bedienelement druckempfindlich auszuführen, so dass eine zweite Eingabe, vorzugsweise eine Bestätigung einer mit der ersten Eingabe getroffenen Auswahl, vorgenommen werden kann. Damit wird es möglich, z.B. in einer Anzeige zunächst durch ein Verdrehen des Bedienelementes einen Menüpunkt anzuwählen, während die Anwahl anschließend durch einen Druck, also vorzugsweise durch ein festes, allseitig Umfassen des dem Bedienelement zugewiesenen Bereichs des Lenkradkranzes, bestätigt werden kann.

Damit ein Benutzer das Bedienelement an dem Lenkradkranz leicht erfühlen kann, weist es ferner vorteilhaft eine Oberfläche auf, die sich fühlbar von der übrigen Oberfläche des Lenkradkranzes unterscheidet. Z.B. ist es möglich, diese Oberfläche leicht aufzurauen bzw. mit Erhöhungen zu versehen, während der übrige Lenkradkranz im wesentlichen mit einer glatten Oberfläche ausgeführt ist.

Vorteilhaft wird das erfindungsgemäße Bedienelement zur Auswahl eines Menüpunktes in einer Anzeige verwendet. Der Benutzer kann somit eine Auswahl in einem Menü eines Fahrerinformationssystems treffen, z.B. eine Fahrzielanwahl oder eine Senderauswahl eines Radios, ohne das Lenkrad loslassen zu müssen. Damit wird die Fahrsicherheit erhöht.

### Zeichnung

Ausführungsbeispiele der Erfindung sind in der Zeichnung dargestellt und in der nachfolgenden Beschreibung näher erläutert. Es zeigen
Figur 1 eine Ansicht eines erfindungsgemäßen Lenkrades mit einem Bedienelement und möglichen Positionen weiterer, zusätzlicher Bedienelemente,
Figur 2 eine Detailansicht eines erfindungsgemäßen Bedienelements an einem Lenkradkranz,
Figur 3a eine Ansicht auf eine Ausführung eines erfindungsgemäßen Bedienelements zur Herstellung einer Rastfunktion,
Figur 3b einen Rasthaken zur Detektion der Position eines erfindungsgemäßen Bedienelements,
Figur 4 eine Anzeige, in der eine Auswahl mit einem erfindungsgemäßen Bedienelement durchgeführt wird.

### Beschreibung des Ausführungsbeispiels

Die vorliegende Erfindung kann prinzipiell für beliebige Steuervorrichtungen verwendet werden. Insbesondere ist sie vorteilhaft in Fahrzeugen einsetzbar, besonders in Kraftfahrzeugen, bei denen ein Fahrer die Fahrtrichtung durch das Lenkrad stets kontrollieren muss und gegebenenfalls insbesondere bei kritischen Fahrsituationen schnell eingreifen muss. Hierzu ist es erforderlich, dass er stets Kontakt zu dem Lenkrad hält, so dass er im Zweifelsfall schnell eine Kraftübertragung auf das Lenkrad ausführen kann, um die Fahrtrichtung des Fahrzeugs zu korrigieren. Im Folgenden ist daher die vorliegende Erfindung am Beispiel eines Lenkrades in einem Kraftfahrzeug erläutert.

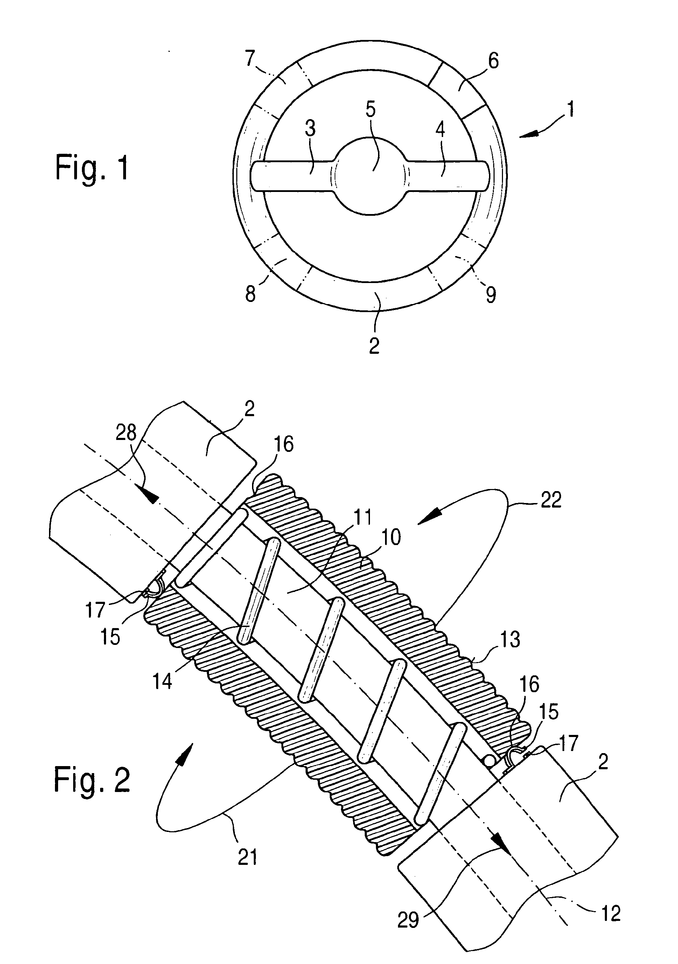

Figur 1 zeigt ein erfindungsgemäßes Lenkrad 1 das zur Steuerung in einem Kraftfahrzeug dient. Das Lenkrad 1 weist einen ungefähr torusförmig ausgebildeten Lenkradkranz 2 auf, der über Speichen 3, 4 mit einem Pralltopf 5 in der Lenkradmitte verbunden ist. In dem Pralltopf 5 ist z.B. ein Airbag angeordnet. An der Rückseite des Pralltopfes 5 ist das Lenkrad 1 drehbar gelagert, so dass es um die ungefähr senkrecht zu der durch den Lenkradkranz 2 beschriebenen Fläche durch den Pralltopf 5 verlaufenden Drehachse gedreht werden kann, um die Fahrtrichtung des Fahrzeugs zu korrigieren. Über diese drehbare Lagerung ist das Lenkrad zudem z.B. über Spiralkabel, eine optische Kopplung oder eine kapazitive Kopplung mit einer Fahrzeugelektronik derart verbunden, dass über ein Bedienelement 6 vorgenommene Einstellungen an eine Recheneinheit im Fahrzeug übertragen werden können, die in der Figur 1 ebenfalls nicht gezeigt ist. Das Bedienelement 6 ist an dem Lenkradkranz 2 angeordnet, wobei es lediglich einen Kreisausschnitt des Lenkradkranzes 2 umfasst. In einer ersten Ausführungsform kann das Bedienelement 6 dabei so groß ausgeführt werden, dass seine Ausdehnung entlang dem Lenkradkranz 2 ungefähr der Breite der Hand eines Benutzers entspricht, so dass das Bedienelement 6 mit der gesamten Hand des Benutzers um die im Prinzip durch den Lenkradkranz 2 beschriebene Achse herum gedreht werden kann. In einer weiteren Ausführungsform ist es auch möglich, dass das Bedienelement 6 nur eine Länge von wenigen Zentimetern, z.B. 3 cm, entlang des Lenkradkranzes 2 umfasst, so dass der Benutzer mit dem dritten, vierten und fünften Finder Lenkrad 1 umgreift, während er mit Daumen und Zeigefinger das Bedienelement um den Lenkradkranz 2 herumdrehen kann.

In einer ersten Ausführungsform ist einem Lenkradkranz 2 lediglich an einer Stelle, vorzugsweise im rechten oberen Viertel des Lenkrades, ein Bedienelement 6 angeordnet. Hierdurch ist es bei der häufigsten Variante der Steuerung des Fahrzeugs, dem Geradeausfahren, für den Fahrer leicht zugänglich. Ferner ist es jedoch auch möglich, anstelle oder zusätzlich ein weiteres Bedienelement 7 im linken oberen Viertel anzubringen, das für Linkshänder geeignet zu bedienen ist. Entsprechend können in dem unteren Viertel des Lenkrades weitere Bedienelemente 8, 9 angeordnet sein. Diese Positionen sind insbesondere dann gut zugänglich, wenn der Fahrer das Lenkrad nur am unteren Rand hält, während er z.B. auf einer Seitenlehne die Arme abgelegt hat, z.B. auf langen, geraden Autobahnstrecken. Insgesamt können dabei jeweils eines, mehrere oder alle der entsprechenden, in der Figur 1 gezeigten Bedienelemente 6, 7, 8, 9 an dem Lenkrad 1 angeordnet sein.

Anhand der Figur 2 ist eine Ausführung des erfindungsgemäßen Bedienelementes erläutert. Die Abdeckung des Lenkradkranzes 2 weist hierzu eine Vertiefung auf, die in einem für die Anordnung des Bedienelements vorgesehenen Bereich in den Lenkradkranz 2 eingebracht ist. Hierdurch wird ein Bereich des torusförmigen Lenkradkranzes definiert, in dem der Radius des Torus gegenüber den übrigen Bereichen des Lenkradkranzes verringert ist. In diesem Ausschnitt verbleibt in der Vertiefung ein zentraler Bereich 11 des Lenkradkranzes 2, um den ein zylindermantelartig ausgeformtes Bedienelement 10 um den zentralen Bereich 11 des Lenkradkranzes herum so angeordnet ist, dass sich eine Oberfläche 13 des Bedienelementes 10 nicht oder nur unwesentlich über die Oberfläche des Lenkradkranzes 2 erhebt. Der zentrale Bereich 11 des Lenkradkranzes 2 bildet eine Tragestruktur und zieht sich in einer bevorzugten Ausführungsform um das gesamte Lenkrad 1 herum. In den Bereichen, in denen kein Bedienelement angeordnet ist die zentrale Tragestruktur 11 z.B. durch ein Kunststoffmaterial zur besseren Greifbarkeit abgedeckt. Durch die zentrale Tragestruktur 11 verläuft auch die Mittelachse 12 des Lenkradkranzes, die ebenfalls gestrichelt eingezeichnet ist. Das Bedienelement 10 lässt sich im Uhrzeigersinn gemäß einem ersten Pfeil 21 und gegen den Uhrzeigersinn gemäß einem zweiten Pfeil 22 in der Figur 2 um die Tragestruktur 11 herum drehen, wobei die Mittelachse 12 die Drehachse darstellt. Da die Mittelachse 12 leicht gekrümmt ist, ist diese Beschreibung als Näherung anzusehen.

Zur besseren Greifbarkeit ist eine Außenoberfläche 13 des Bedienelementes 10 aufgeraut oder mit Erhöhungen derart versehen, dass ein Benutzer das Bedienelement 10 an seiner besonderen Außenoberfläche erfühlen kann, wenn er den Lenkradkranz entlang greift. Hierdurch kann der Benutzer das Bedienelement 10 leicht aufwinden und eine Steuerung entsprechend seinen Wünschen entweder mit einer Drehung in Richtung des Uhrzeigersinns oder gegen den Uhrzeigersinn vornehmen.

In einer ersten Ausführungsform ist eine Torsionsfeder 14 zwischen der Tragestruktur 11 und dem Bedienelement 10 so angeordnet, dass bei einer jeweiligen Drehung des Bedienelementes die Feder gespannt wird. Übt der Benutzer keine Kraft mehr auf das Bedienelement 10 aus, so wird es in seine Ausgangslage zurückgestellt, in der die einseitig eingespannte Feder 14 entspannt ist. Eine Bewegung des Bedienelementes 10 kann in einer ersten Ausführungsform über einen Rasthaken 15 oder einen anderen elektronischen Sensor detektiert werden, der bevorzugt an dem Lenkradkranz 2 angeordnet ist und der über eine nicht gezeigte elektronische Verbindung mit einer Auswerteeinheit entweder im Lenkrad selbst oder in einem Fahrzeugrechner an beliebiger Stelle im Fahrzeug verbunden ist. Bei einer Verwendung einer Federanordnung ist bevorzugt ein Anschlag vorgesehen. Es besteht bei jeder Drehrichtung jeweils ein Anschlag, so dass das Bedienelement nicht über diesen Anschlag hinaus gegenüber dem Lenkradkranz 2 verdreht werden kann, um eine Zerstörung der Feder 14 durch eine Überdehnung zu vermeiden.

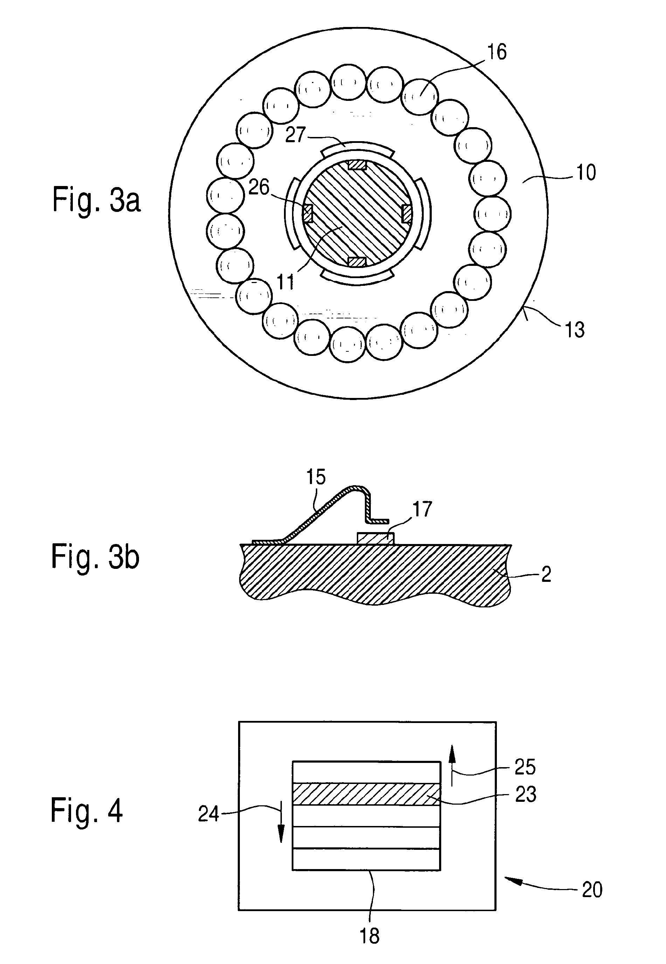

In einer weiteren Ausführungsform ist das Bedienelement 10 in beide Richtungen unbegrenzt um die Tragestruktur 11 und die Mittelachse 12 drehbar. Hierzu ist eine Verrastung vorgesehen, bei der ein Rasthaken 15 in dafür vorgesehene Vertiefungen 16 in des Bedienelements 10 eingreift. Details einer solchen Verrastung sind in den Figuren 3a und 3b dargestellt. An einer für den Benutzer nicht zugänglichen Schmalseite des hülsenförmigen Bedienelementes 10 sind die Vertiefungen 16 angeordnet. Der Rasthaken 15 kann dabei so an den Lenkradkranz 2 angeformt sein, dass bei jedem Überspringen des Rasthakens von einer Vertiefung in die nächste Vertiefung ein elektrischer Kontakt 17 mit dem Rasthaken 15 verbunden wird und somit ein Stromkreis kurzfristig geschlossen wird. Um eine Richtung erfassen zu können, ist es möglich, an der gegenüberliegenden Schmalseite ebenfalls eine entsprechende Verrastungsstruktur vorzusehen, die jedoch geringfügig, aber unsymmetrisch versetzt gegenüber der anderen, gegenüberliegenden Verrastungsstruktur ist. So kann daran, welcher Rasthaken zuerst auslöst, festgestellt werden, in welche Drehrichtung das Bedienelement 10 verdreht wird. Beträgt bei beiden gegenüberliegenden Raststrukturen jeweils der Abstand zwischen zwei Auslösepunkten z.B. 15° so könnte bei einer Drehung im Uhrzeigersinn ausgehend von einem Rastpunkt der ersten Raststruktur ein Rastpunkt auf der gegenüberliegenden zweiten Raststruktur nach einer Drehung von 5° erfasst werden, während bei einer Drehung in die Gegenrichtung erst bei einer Drehung um 10° ein Auslösen erfasst wird.

In der Figur 4 ist eine Anwendung einer Steuerung mittels des erfindungsgemäßen Bedienelementes gezeigt. In einer Anzeige 20 im Fahrzeug ist ein Auswahlmenü 18 dargestellt, das eine Reihe von Menüpunkten zeigt. Ein erster Menüpunkt 23 ist mittels einer Auswahlmarke hervorgehoben dargestellt. Die Menüliste kann z.B. eine Liste von Titelnamen von Musikstücken, von Namen auswählbarer Radiosender, von Navigationszielen oder von Telefonnummern sein. Ferner können auf diese Weise auch insgesamt Unterfunktionen von zugeordneten Hauptfunktionen ausgewählt werden. Durch eine Drehung des Bedienelements in Uhrzeigerrichtung erfolgt gemäß einem ersten Pfeil 24 ein Wechsel der Auswahlmarke von dem hervorgehobenen Menüpunkt 23 zu dem unter dem hervorgehobenen Menüpunkt befindlichen Menüpunkt. Bei einer Drehung gegen den Uhrzeigersinn wird die Auswahlmarke gemäß dem zweiten Pfeil 25 zu dem darüber liegenden Menüpunkt verzweigt. Die Wahl der Drehrichtung und der Zuordnung einer Drehrichtung zu dem Bedienelement kann dabei auch vertauscht werden.

Eine Bestätigung der somit getroffenen Auswahl kann in einer ersten Ausführungsform über ein zusätzliches Bedienelement, z.B. einen Druckknopf vorgenommen werden. In einer bevorzugten Ausführungsform ist jedoch die Bestätigungsfunktion ebenfalls in das Bedienelement 10 integriert. Hierzu ist das Bedienelement 10 derart druckempfindlich ausgeführt, dass ein umfassender Druck auf das Bedienelement 10 dazu führt, dass die getroffene Auswahl bestätigt wird. Entsprechend kann auch eine beliebige, andere Eingabe durch einen Druck auf das Bedienelement bestätigt werden. Zur Ausführung der Druckfunktion sind bevorzugt zwischen dem Bedienelement 10 und der Tragestruktur elektrische Kontakte vorgesehen, wobei durch einen Druck auf das Bedienelement eine Verformung des Bedienelementes derart eintritt, dass die elektrischen Kontakte zwischen dem Bedienelement 10 und der Tragestruktur 11 bevorzugt auf entgegenliegenden Seiten geschlossen werden. Positionen für solche Kontakte sind in der Figur 3a angedeutet und mit den Bezugszeichen 26 bzw. 27 versehen.

Ferner ist es auch möglich, eine Verschiebung des Bedienelementes in axialer Richtung der Mittelachse 12 zu detektieren und hierdurch eine Steuerung vorzunehmen. Das Bedienelement 10 kann somit in Pfeilrichtung 28 und in die entgegenliegende Pfeilrichtung 29 verschoben werden. Hierzu sind bevorzugt geeignete Federelemente zur Abstützung zwischen dem Lenkradskranz 2 und dem Bedienelement auf beiden Seiten oder auch einseitig erforderlich. Eine Erfassung einer solchen Betätigung kann durch elektrische Kontakte zwischen dem Bedienelement 10 und dem Lenkradkranz 2 erfolgen, die an den Schmalseiten des Bedienelements 10 angeordnet sind und die durch eine solche Bedienung geschlossen werden.

## Patentansprüche

1. Lenkrad mit einem Bedienelement, wobei das Lenkrad einen Lenkradkranz aufweist und das Bedienelement an dem Lenkradkranz angeordnet ist, wobei das Bedienelement (6, 7, 8, 9, 10) an dem Lenkradkranz (2) derart für eine Eingabe drehbar gelagert ist, dass es einen Ausschnitt des Lenkradkranzes (2) umgreift, **gekennzeichnet durch** eine Feder (14) zur Rückstellung des Bedienelements (10) in eine Ausgangslage nach einem Verdrehen aus der Ausgangslage.

2. Lenkrad mit einem Bedienelement nach Anspruch 1, **dadurch gekennzeichnet, dass** das Bedienelement (10) um eine Drehachse drehbar ist, die zumindest näherungsweise durch eine Mittelachse (12) des Lenkradkranzes (2) beschrieben wird

3. Lenkrad mit einem Bedienelement nach einem der vorherigen Ansprüche, **dadurch gekennzeichnet, dass** das Bedienelement (10) in Raststufen drehbar ist.

4. Lenkrad mit einem Bedienelement nach einem der vorherigen Ansprüche, **dadurch gekennzeichnet, dass** das Bedienelement (10) druckempfindlich zum Erfassen einer weiteren Eingabe ausgeführt ist.

5. Lenkrad mit einem Bedienelement nach einem der vorherigen Ansprüche, **dadurch gekennzeichnet, dass** das Bedienelement (10) eine Oberfläche (13) aufweist, die sich von ihrer fühlbaren Beschaffenheit von dem übrigen Lenkradkranz (2) unterscheidet.

6. Verwendung eines Lenkrades mit einem Bedienelement nach einem der vorherigen Ansprüche in einem Fahrzeug zur Auswahl eines Menüpunktes (23) aus einer in einer Anzeige (20) dargestellten Auswahl (18).

## Claims

1. Steering wheel with an operating element, the steering wheel having a steering-wheel rim and the operating element being arranged on the steering-wheel rim, the operating element (6, 7, 8, 9, 10) being mounted rotatably for an input on the steering-wheel rim (2) in such a manner that it engages around a cutout of the steering-wheel rim (3), **characterized by** a spring (14) for resetting the operating element (10) into a starting position after it has been rotated out of the starting position.

2. Steering wheel with an operating element according to Claim 1, **characterized in that** the operating element (10) can be rotated about an axis of rotation which is at least approximately described by a centre axis (12) of the steering wheel rim (2).

3. Steering wheel with an operating element according to one of the preceding claims, **characterized in that** the operating element (10) can be rotated in latching stages.

4. Steering wheel with an operating element according to one of the preceding claims, **characterized in that** the operating element (10) is of pressure-sensitive design in order to detect a further input.

5. Steering wheel with an operating element according to one of the preceding claims, **characterized in that** the operating element (10) has a surface (13) which differs by tactile composition from the rest of the steering-wheel rim (2).

6. Use of a steering wheel with an operating element according to one of the preceding claims, in a vehicle in order to select a menu item (23) from a selection (18) illustrated in a display (20).

## Revendications

1. Volant avec élément de réglage, le volant présentant une couronne de volant portant l'élément de réglage (6, 7, 8, 9, 10) monté de manière rotative sur la couronne de volant (2) afin de permettre une entrée de données en entourant une section de la couronne de volant (2),
**caractérisé par**
un ressort (14) permettant de rappeler l'élément de réglage (10) dans la position de départ qu'il a quittée en tournant.

2. Volant avec élément de réglage selon la revendication 1,
**caractérisé en ce que**
l'élément de réglage (10) est rotatif autour d'un axe de rotation décrit au moins approximativement par un axe médian (12) de la couronne de volant (2).

3. Volant avec élément de réglage selon l'une des revendications précédentes,
**caractérisé en ce que**
l'élément de réglage (10) est rotatif par crans.

4. Volant avec élément de réglage selon l'une des revendications précédentes,
**caractérisé en ce que**
l'élément de réglage (10) est sensible à la pression pour pouvoir saisir une autre entrée de données.

5. Volant avec élément de réglage selon l'une des revendications précédentes,
**caractérisé en ce que**
l'élément de réglage (10) présente une surface (13) dont la structure se différencie au toucher du reste de la couronne de volant (2).

6. Utilisation dans un véhicule d'un volant avec élément de réglage selon l'une des revendications précédentes, permettant de sélectionner une option (23) parmi une sélection (18) représentée dans un indicateur (20).
